# FASCICULE DE BREVET EUROPEEN

(11) **EP 0 939 012 B1**
(45) Date de publication et mention de la délivrance du brevet: **05.11.2003**
(21) Numéro de dépôt: 99400426.5
(22) Date de dépôt: 22.02.1999
(51) Int. Cl.: B60R 25/04

(54) **Procédé de vérification de la cohérence d'informations téléchargées dans un calculateur**
Verfahren zur Überprüfung der Kohärenz von auf einen Rechner ferngeladener Information
Method for verifying that information down-loaded to a computer is coherent

(30) Priorité: 26.02.1998 FR 9802358
(43) Date de publication de la demande: 01.09.1999
(73) Titulaire: AUTOMOBILES PEUGEOT, 75116 Paris (FR); AUTOMOBILES CITROEN, 92200 Neuilly-sur-Seine (FR); Renault s.a.s., 92100 Boulogne Billancourt (FR)
(72) Inventeur: Loubeyre, Yves, 92380 Garches (FR); Abadie, eric, 78470 St Remy Les Chevreuse (FR); Vaillard, Pierre, 91430 Igny (FR)
(74) Mandataire: Habasque, Etienne Joel Jean-François

(56) Documents cités:
- EP-A- 0 402 210
- EP-A- 0 682 315
- DE-A- 4 333 474
- FR-A- 2 719 919
- GB-A- 2 205 667

## Description

La présente invention concerne un procédé de vérification de la cohérence d'informations téléchargées par un outil de téléchargement dans un calculateur de contrôle du fonctionnement d'un organe fonctionnel de véhicule automobile.

On connaît déjà dans l'état de la technique, des calculateurs de pilotage de ce type qui comportent une unité à microprocesseur associée à des moyens de mémorisation de données.

Les progrès de la technologie informatique ont permis par utilisation de circuits électroniques de plus en plus performants, d'apporter beaucoup plus de souplesse à la réalisation des systèmes informatiques notamment embarqués à bord des véhicules automobiles.

Cependant, l'introduction croissante de programmes dans les équipements, s'accompagne de nouveaux problèmes liés à la nature spécifique du produit logiciel et à son élaboration.

La souplesse de modification est telle qu'elle absorbe la majeure partie des adaptations du système, mais cette souplesse n'est qu'apparente car une modification mineure de code peut avoir des répercutions sur l'ensemble du logiciel.

Les problèmes de maintenance des logiciels sont d'un ordre différent de ceux du matériel.

En effet, un logiciel ne tombe pas en panne, mais il faut pour le corriger ou le modifier, le même niveau de compétence que pour l'élaborer.

On a donc développé dans l'état de la technique, différents procédés et systèmes qui permettent de télécharger des informations par exemple de mise à jour dans de tels calculateurs.

Ces opérations de téléchargement sont réalisées par des outils de téléchargement qui sont adaptés pour être reliés par exemple à une prise quelconque du véhicule et pour avoir accès au calculateur et à ses moyens de mémorisation de données afin par exemple de charger dans ceux-ci de nouvelles informations.

Cependant, la structure actuelle des calculateurs et les méthodes d'accès à ceux-ci, sont telles que ceux-ci ne sont pas protégés efficacement contre des modifications de données non autorisées.

On a alors développé dans l'état de la technique, un certain nombre de procédés de contrôle de l'accès à ces calculateurs.

Un exemple d'un tel procédé pourra être trouvé dans le document FR-A-2 719 924 (preambule de la revendication 1) et le document FR-A-2 719 919 décrit une structure de calculateur de ce type.

Par ailleurs, il se pose également le problème de la cohérence des informations téléchargées dans le calculateur.

En effet, on a proposé jusqu'à présent, pour vérifier cette cohérence, de calculer un mot de validation à partir des informations à télécharger et d'adjoindre ce mot de validation aux informations à télécharger dans le calculateur, par l'outil de téléchargement.

A la réception de ce message comportant ces informations et ce mot de validation, le calculateur procède à son propre calcul d'un mot de validation à partir des informations et compare ce mot de validation calculé par lui-même au mot de validation contenu dans le message afin de vérifier la cohérence des informations.

Cependant, un tel procédé ne permet pas de garantir que les informations téléchargées n'ont pas été manipulées car le calculateur ne fait que vérifier la concordance entre un mot de validation calculé sur les informations et un mot de validation joint à ces informations et donc accessible.

Le but de l'invention est donc de résoudre ces problèmes.

A cet effet, l'invention a pour objet un procédé de vérification de la cohérence d'informations téléchargées par un outil de téléchargement, dans un calculateur de contrôle du fonctionnement d'un organe fonctionnel d'un véhicule automobile, caractérisé en ce qu'il comporte les étapes suivantes :
- calcul par le calculateur d'un mot de validation des informations à partir de celles-ci,
- comparaison par le calculateur de ce mot de validation calculé à un mot de validation correspondant, stocké dans ce calculateur, et non accessible à l'outil de téléchargement, et
- validation ou invalidation par le calculateur des informations téléchargées en cas de concordance ou de discordance entre les mots de validation calculé et stocké.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant le raccordement d'un outil de téléchargement à un calculateur;
- la Fig.2 représente un schéma synoptique illustrant un procédé de vérification de l'état de la technique; et
- la Fig.3 représente un schéma synoptique illustrant un procédé de vérification selon l'invention.

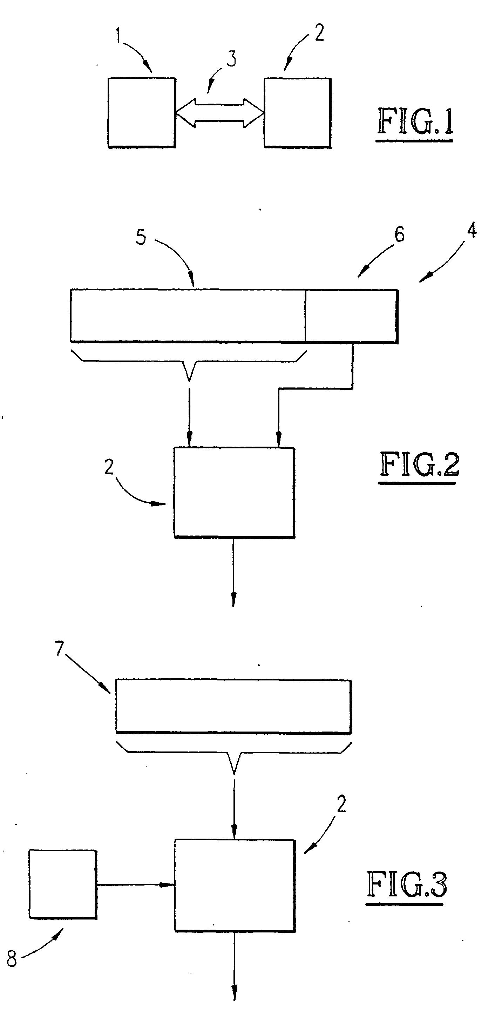

On connaît en effet dans l'état de la technique, des systèmes de téléchargement d'informations par un outil de téléchargement désigné par la référence générale 1 sur la figure 1, dans un calculateur désigné par la référence générale 2 sur cette figure, de contrôle du fonctionnement d'un organe fonctionnel d'un véhicule automobile.

Des moyens de raccordement désignés par la référence générale 3 sont alors utilisés pour raccorder ces deux organes l'un à l'autre, ces moyens de raccordement pouvant par exemple comporter des connecteurs complémentaires et une partie de faisceau électrique du véhicule.

Dans l'état de la technique, et comme cela est représenté sur la figure 2, l'outil de téléchargement émet à destination du calculateur, un message désigné par la référence générale 4.

Ce message comporte des informations à télécharger dans le calculateur 2, ces informations étant désignées par la référence générale 5, et un mot de validation 6 qui est calculé par exemple par l'outil de téléchargement ou autre, à partir des informations 5.

Lorsque le calculateur 2 souhaite vérifier la cohérence des informations téléchargées, il procède à un calcul d'un mot de validation sur les informations 5 téléchargées et compare ce mot calculé au mot 6 transmis dans le message, afin de valider ou d'invalider les informations 5 en cas de concordance ou de discordance entre le mot calculé sur les informations 5 et ce mot de validation 6 du message.

On conçoit cependant qu'une telle structure de message peut facilement être manipulée.

Pour résoudre ces problèmes et selon le procédé suivant l'invention, tel qu'illustré sur la figure 3, l'outil de téléchargement émet en direction du calculateur 2, uniquement les informations à télécharger, ces informations étant désignées par la référence générale 7 sur cette figure 3.

Le calculateur 2 procède alors au calcul d'un mot de validation des informations 7 à partir de celles-ci.

Ensuite, ce calculateur 2 compare ce mot de validation calculé sur la base des informations 7, à un mot de validation 8 stocké par exemple au préalable dans ce calculateur, et non accessible à l'outil de téléchargement pour valider ou invalider les informations en cas de concordance ou de discordance entre ces mots.

C'est ainsi par exemple que ce mot de validation 8 peut être stocké quelque part en mémoire non volatile du calculateur par exemple lors de la fabrication ou de l'activation de celui-ci.

On conçoit alors qu'un tel procédé permet de vérifier de manière relativement sûre la cohérence des informations téléchargées dans le calculateur.

En effet, le mot de validation 8 stocké dans le calculateur étant inaccessible à l'outil de téléchargement, les risques de manipulation du calculateur par chargement dans celui-ci d'informations frauduleuses, sont faibles en raison du fait qu'il est extrêmement difficile voire impossible de générer des informations avec un mot de validation correct alors que celui-ci et sa méthode de calcul à partir des informations sont inconnus de l'outil de téléchargement.

De plus, des données de remplissage peuvent également être intégrées dans les informations 7 pour améliorer encore la sécurité de la vérification.

Il va de soi bien entendu que différents algorithmes de calcul peuvent être utilisés par le calculateur pour obtenir le mot de validation des informations à partir de celles-ci, de façon classique.

## Revendications

1. Procédé de vérification de la cohérence d'informations (7) téléchargées par un outil de téléchargement (1), dans un calculateur (2) de contrôle du fonctionnement d'un organe fonctionnel d'un véhicule automobile, **caractérisé en ce qu'**il comporte les étapes suivantes :
- calcul par le calculateur (2) d'un mot de validation des informations (7) à partir de celles-ci,
- comparaison par le calculateur (2) de ce mot de validation calculé à un mot de validation correspondant (8), stocké dans ce calculateur, et non accessible à l'outil de téléchargement (1), et
- validation ou invalidation par le calculateur (2) des informations téléchargées en cas de concordance ou de discordance entre les mots de validation calculé et stocké.

2. Procédé selon la revendication 1, **caractérisé en ce que** les informations (7) comportent des données de remplissage.

## Patentansprüche

1. Verfahren zur Verifizierung der Kohärenz von Informationen (7), die über ein Fernladegerät (1) in einen Rechner (2) zur Steuerung der Funktion einer funktionalen Einrichtung eines Automobils geladen wurden, **dadurch gekennzeichnet, dass** es folgende Schritte umfasst:
- durch den Rechner (2) erfolgende Berechnung eines Validierungsworts für die Informationen (7) ausgehend von denselben,
- durch den Rechner (2) erfolgender Vergleich des berechneten Validierungsworts mit einem entsprechenden, in dem Rechner (2) für das Fernladegerät (1) unzugänglich gespeicherten Validierungswort (8) und
- durch den Rechner (2) erfolgende Validierung oder Nicht-Validierung der geladenen Informationen im Falle der Konkordanz oder Nicht-Konkordanz zwischen dem berechneten Validierungswort und dem gespeicherten Validierungswort.

2. Verfahren nach Anspruch 1, **dadurch gekennzeichnet, dass** die Informationen (7) Fülldaten umfassen.

## Claims

1. Process for verifying the coherence of data (7) downloaded by a download utility (1) in a computer (2) for controlling the operation of a functional member of a motor vehicle, **characterized in that** it comprises the following steps:
- calculation by the computer (2) of a validation word for the data (7), on the basis of these data,
- comparison by the computer (2) of this calculated validation word with a corresponding validation word (8) stored in this computer and not accessible to the download utility (1), and
- validation or non-validation by the computer (2) of the downloaded data if there is agreement or disagreement between the calculated and stored validation words.

2. Process according to Claim 1, **characterized in that** the data (7) comprise filler data.
